Europäisches Patentamt

(19) European Patent Office

Office européen des brevets

(11) **EP 0 760 576 A1**

(12) **EUROPEAN PATENT APPLICATION**

(43) Date of publication:
05.03.1997 Bulletin 1997/10

(51) Int. Cl.$^6$: **H04M 19/02**

(21) Application number: **95306029.0**

(22) Date of filing: **30.08.1995**

(84) Designated Contracting States:
AT DE FR IT SE

(71) Applicant: **HARRIS CORPORATION**
**Melbourne, Florida 32919 (US)**

(72) Inventor: **Cotreau, Gerald M.**
**Melbourne, Florida 32904 (US)**

(74) Representative: **van Berlyn, Ronald Gilbert**
**23, Centre Heights**
**London NW3 6JG (GB)**

(54) **An Integrated ringer relay circuit and method**

(57) A circuit and method for isolating a subscriber line interface circuit ("SLIC") from the ringer generator in a telephone system. Using a gain blocking device to provide a signal gain when the ringer generator is not being utilized and to provide a high impedance when a ringer signal is present. A current mode subscriber line interface circuit (SLIC) for a telephone system in which AC and DC impedances for tip and ring connections of the SLIC are separately set. A ground key detector for a subscriber line interface circuit (SLIC) uses information from the tip and ring voltage sensing resistor RS1 and RS2 to determine whether the ring side .of the telephone line has been grounded, as when a ground key or fault occurs.

FIG. 3

## Description

The present invention relates to a subscriber line interface circuit for a telephone system, and in particular to a current or voltage subscriber line interface circuit in which the interface circuit is isolated from high AC voltages, such as from a ringer generator without a relay or other device which might substantially distort the signal on the telephone line.

A telephone system subscriber line interface circuit (SLIC) connects a balanced two-wire transmission path (the path to and from the subscriber telephone handset) with an unbalanced four wire transmission path (the path between telephone central offices). SLIC perform various functions, including battery feed, overvoltage protection, ringing, signaling, hybrid, and timing.

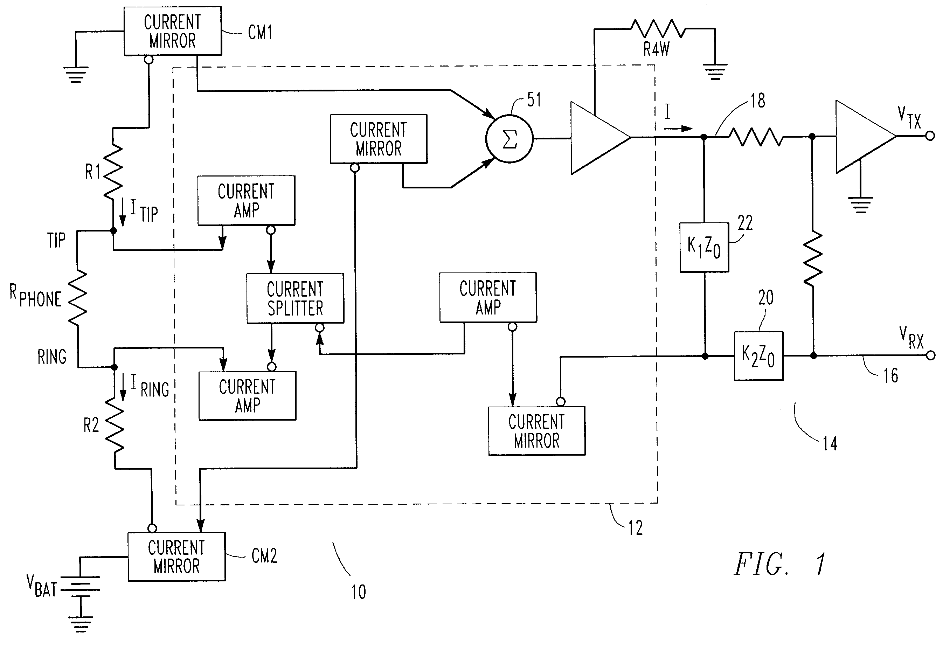

SLIC operation is known and need not be considered in detail. By way of brief explanatory example, and with reference to Figure 1, a current mode SLIC 10 (a SLIC that processes currents related to the signals in the transmission paths, rather than the voltages) uses current information available in the tip and ring voltage sensing resistors R! and R2 at the two-wire side of the SLIC. The current information is provided to a hybrid circuit 12 that detects incoming signals and sends them in the correct direction. The hybrid circuit 12, in combination with external circuitry 14 connected to the four-wire side of the SLIC, provides appropriate amplification, transhybrid echo cancellation, and impedance matching.

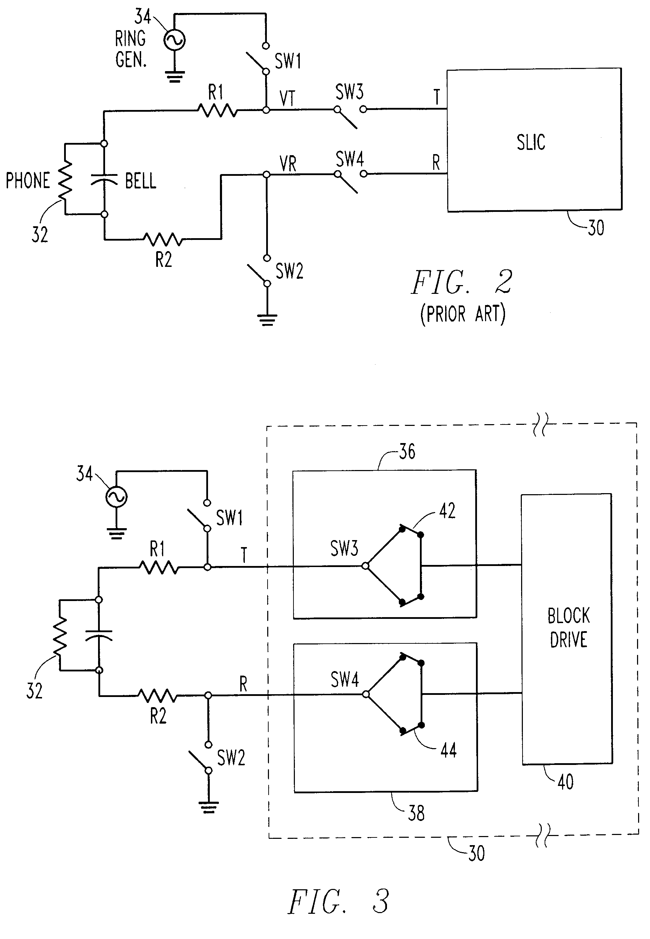

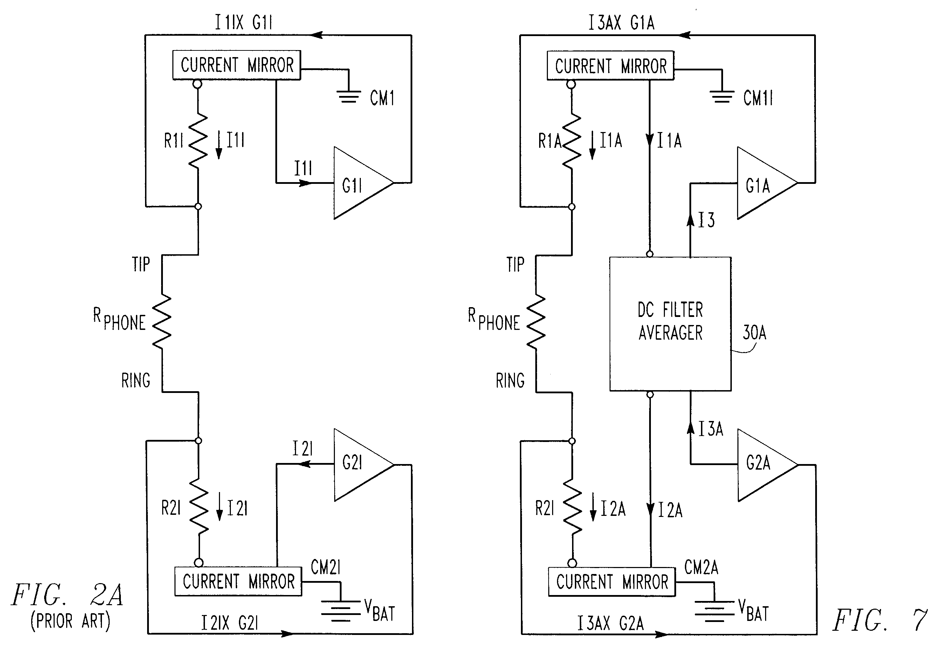

The present invention is related to the application of ringer generator signals to the telephone circuit. With reference to Figure 2, a SLIC 30 may be connected to a telephone instrument (represented by the resistor 32) through tip and ring paths (T, R). When the lip and ring paths are carrying a voice signal, the signal is generally on the order of 3 volts in amplitude, requiring current on the order of 4 ma in amplitude, having a bandwidth of up to 16 kHz, and a precision (or distortion) on the order of tenths of a percent. The voice transmission signal is bidirectional and sometimes the battery feed is superimposed on the voice signal, yielding a current of up to 30 ma in amplitude. Moreover, the tip and ring paths (and all switches contained therein) cannot introduce any crossover distortion when the current through the circuit changes direction.

Generally, telephone instruments are caused to "ring" by the instrument's detection of a ringer signal across the tip and ring leads. The ringer signal is selectively applied to the transmission path to alert the telephone instrument of an incoming call and generally remains on the transmission path until the telephone is "answered" by taking the telephone instrument off hook. While the tip and ring paths must carry both the voice and the ringer signals (not necessarily simultaneously), the characteristics of the two types of signals are markedly different. For example, a typical ringer signal may have voltage amplitudes of plus-to-minus 150 volts, current amplitudes of up to 200 ma, a bandwidth of 75 Hz. Generally, distortion and crossover distortion of the ringer signal are not important considerations for ringer signals.

Combining the requirements of the two types of signals, voice transmission and ringer signals, yields the requirement that the circuit between the SLIC and the telephone instrument must function as a two channel multiplexer (or switch), where one switch must pass a voice signal without affecting the bandwidth or distortion level and the other switch must pass the very high currents of the ringer generator and must withstand and block the very high ringer voltages when the switch is off. With reference to Figure 2, switches SWI and SW2 may be selectively operated to apply the ringer signal, generated by the ringer generator 34, to the transmission path. At or before the time that the ringer signal is applied to the transmission path, the SLIC is protected by opening the circuit between the ringer generator and the SLIC using the switches SW3 and SW4.

This requirement has been met in the prior art by relays. As is well known, the relay is a short circuit when on and an open circuit when off. Generally, a relay has the characteristics of an ideal switch, simultaneously meeting the precision and bandwidth requirements of the voice switch and the current and voltage requirements of the ringer switch. Electromechanical relays are well known in the prior art but are comparatively expensive, slow, occupy valuable circuit real estate, and consume relatively high amounts of power to operate. Accordingly, it is known in the prior art to use solid state switches and multiplexers; however, such devices are generally far from ideal and cannot fully satisfy all the requirements simultaneously. Attempts have been made in the prior art to integrate the required solid state switches in series with the hybrid of the SLIC; however, such attempts have usually resulted in a substantial degradation of the voice signals.

Objects of the present invention are SLIC two-wire return loss is reduced by impedance matching. The two-wire subscriber line is a transmission path with an impedance, typically hundreds of ohms (e._q., 600 to 9000). The SLIC connected to the subscriber's line desirably has a matching impedance to prevent two-wire echo, also known as two-wire return loss. Conventionally, impedance matching has been carried out at the four-wire side of the SLIC by synthesizing a two-wire impedance Zo that approximates the impedance in the two-wire transmission paths. The synthesized impedance Z. is combined with the transmit signal current ITX and then with the receive signal current IRX so as to provide an impedance correction factor that matches, or nearly matches, SLIC impedance to the two-wire impedance. An impedance correction factor, K,Zo, has been provided by an impedance element 20 connecting the transmit path 18 and the receive path 16. The gain of the signal in the receive path 16 is adjusted with impedance element 22 before the signal in the path is corrected with the impedance element 20. The gain adjustment, K2ZO, and the impedance correction factor are related, with the gain adjustment being a function of the impedance factor (typically K,>K2)-

Functionally, the two-wire side of a current mode SLIC operates as depicted in Figure 2A. The tip and ring voltages at the telephone line terminals are converted to currents by imposing the voltages across resistors R1A and R2A and thereafter provided to current mirrors CM1A and CM2A. Current mirrors are disclosed in the specification of U.S. Patent No. 4,203,012. Current mirrors provide one or more copies of an incoming signal and may also be current amplifiers, multiplying a reflected current by an amount N that may be larger or smaller than one. When a current mirror provides more than one copy, each copy may be multiplied by a separate N.

The tip current, I1A, is proportional to the voltage at the tip connection of the telephone line, and the ring current, I2A, is proportional to the voltage at the ring connection of the telephone line.

$$I1A = (Ground - V_{TIP}/R1A \hspace{3cm} (1)$$

$$I2A = (V_{RING} - V_{BATTERY})/R2A \hspace{3cm} (2)$$

Synthesized impedances of appropriate magnitude are provided to the two-wire side by increasing the gain of IiA and I2A in current gain blocks GiA and G2A. As will be appreciated, the synthesized impedance is a function of both resistance and gain. For example, the impedances at the tip and ring connections are:

$$Z_{TIP} \; R1A/(1 + G1A) \hspace{3cm} (3)$$

$$Z_{RING} \; R2A/(1 + G2A) \hspace{3cm} (4)$$

However, the resistances of R1A and R2A and the gains G1A and G2A are not independent and must be changed together when an-impedance is adjusted. As the gains may be complex, the adjustment is usually not a simple one.

Some telephone systems ground the ring side of the telephone line to signal the operator, this signal being denominated a ground key. In such systems, additional circuitry may be provided to indicate a ground key. However, such additional circuitry adds complexity and provides further opportunities for connections to fail. Accordingly, it is desirable to reduce the amount of additional circuitry provided for ground key detection.

A SLIC also desirably is able to protect itself from faults, such as accidental grounding by linemen, cut or downed power lines, etc. If the SLIC does not detect the fault, it will attempt to drive the short and may overheat.

An object of the present invention to provide a novel ground key detector for a SLIC and method of detecting a ground key that obviates the problems of the prior art.

A further object of the present invention to provide a novel ground key detector for a ~SLIC and method of detecting a ground key in which the ground key is indicated by comparing tip and ring currents to a reference current.

Objects of the present invention are to provide a method and apparatus for coupling a SLIC and a ringer signal to a telephone instrument; to provide a method and apparatus for isolating a SLIC from the ringer signal, without substantial degradation of the voice signal; and to provide a method and apparatus in which the means for isolating a SLIC from other portions of a telephone circuit are integrated into the same integrated circuit as the SLIC.

The present invention includes a circuit for a telephone system comprising, a subscriber line interface circuit (""SLIC") having tip and ring paths electrically interconnecting the SLIC and a telephone instrument, a ringer generator for generating a ringer signal, switch means for selectively applying said ringer signal to said tip and ring paths, a selectively operable gain-setting blocking device isolating the SLIC from said ringer signal.

The invention also includes a circuit for setting AC and DC impedances for tip and ring connections of a subscriber line interface circuit (SLIC) comprising first means for providing an, average current of DC components of SLIC tip and ring voltages, second means for providing an average current of AC components of SLIC tip and ring voltages, and third means for changing the amplitude of the average of AC components relative to the amplitude of the average of DC components, so that the AC and DC impedances are separately set.

The invention furthermore includes a subscriber line interface circuit (SLIC) comprising first and second current mirrors for providing separate tip and ring currents that are respectively proportional to tip and ring voltages at a two-wire side of the SLIC, a DC filter and a first averager for providing an average current of DC components of the tip and ring currents, a second averager for providing an average current of the tip and ring currents, means for providing an average current of AC components of the tip and ring currents by removing the average of DC components from the average of tip and ring currents, a current amplifier for amplifying the average of AC components of the tip and ring currents, and for providing a copy of the amplified current from said current amplifier to a transmit voltage connection at a four-wire side of the SLIC; a voltage to current converter for providing a receive current proportional to a receive voltage at the four-wire side of the SLIC, a voltage to current converter for providing a receive current proportional to a receive voltage at the four-wire side of the SLIC, combiner means for providing a feedback current by combining the receive current, the amplified average of AC currents from said current amplifier, and the average of DC currents from said first averaged, and two amplifiers for amplifying said feedback current and providing the amplified feedback current to the two-wire side of the SLIC.

The invention will now be described by way of example, with reference to the accompanying drawings in which:

Figure 1 is a block diagram of a current mode subscriber line interface circuit (SLIC) of the prior art.

Figure 2 is a functional block diagram of a SLIC, telephone instrument, switches and ringer generator of the prior art.

Figure 2A is a partial block diagram of a prior art SLIC depicting functional operation of the two-wire side of the SLIC.

Figure 3 is a partial block diagram of a circuit in accordance with the present invention.

Figure 4 is a partial block diagram of another circuit in accordance with the present invention.

Figure 5 is a partial block diagram of another circuit in accordance with the present invention detailing one embodiment of an op amp which may be used in the present invention.

Figure 6 is a partial block diagram of another circuit in accordance with the present invention depicting the protection of sensing circuits associated with a SLIC.

Figure 7 is a partial block diagram of an embodiment of a SLIC of the present invention depicting functional operation of the two-wire side of the SLIC.

Figure 8 is a part block and part circuit diagram of an embodiment of the present invention in which AC and DC impedance may be separately set.

Figure 9 is a block diagram of an embodiment of a ground key detect circuit of the present invention.

Figure 10 is a block diagram of an embodiment of a fault detect circuit of the present invention illustrated with the ground key detect circuit of Figure 9.

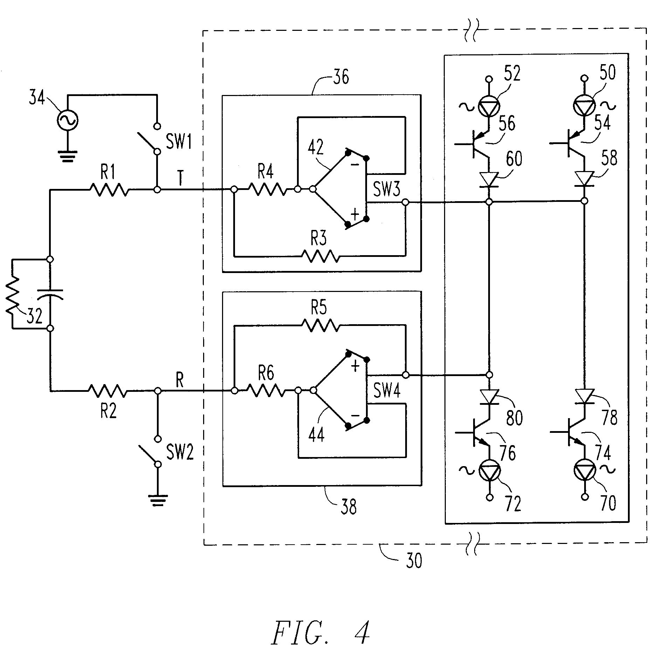

With reference to Figure 3, where like elements bear like reference numerals to those used in Figure 2, a telephone circuit may include a SLIC 30 electrically connected to a telephone, represented by resistor 32, through circuitry represented by resistor RI and resistor R2 along the tip and ring paths. The ringer signal from a ringer generator 34 may be selectively applied to the tip and ring paths through switches SW1 and SW2. Current gain blocks 36, 38 under the control of a current block drive 40 interconnect the tip and ring paths with the SLIC 30. The current gain blocks 36, 38 each include an amplifier 42, 44, respectively.

Switches SW1 and SW2 may be conventional high voltage switches, such as reversed back-to-back SCRS, relays, solid state switches. The SCRs readily handle the voltages of the ringer signal but are not generally suitable for the switches from the SLIC because the turn on behavior of the SCRs causes severe crossover distortion when the switched currents (in the tip and ring paths) reverse direction. Generally, solid state high current switches also have a similar problem as the SCRs and are unacceptable for use as switches in the voice transmission path.

In operation, the amplifier 42 in the current gain block 36 delivers the SLIC drive to the tip terminal of the SLIC. Current gain block 38 similarly contains the amplifier 44 which drives the ring terminal. Both current gain blocks 36, 38 are designed to selectively enter a tri-state mode where the amplifiers are off and their outputs look like high impedances. Accordingly, when it is desired to ring the telephone, the switches Swi and SW2 are closed and the amplifiers 42, 44 in the current gain blocks 36, 38 are turned off, *i.e.*, the outputs of the amplifiers @ 42, 44 appear as high impedances. When the ring generator 34 provides the ring signal, the signal drives the tip and ring paths of the telephone line and the outputs of the current gain blocks 36, 38 bear the ringer signal voltage. Note that the outputs of the current gain blocks 36, 38 are not disconnected from the transmission path, they simply go into a high impedance state and bear the voltage of the ringer signal.

Figure 3 illustrates when the ringer generator 34 is turned off or is disconnected from the transmission path by opening of the switches SW1 and SW2, the amplifiers 42, 44 may be turned on, and, operating normally, the amplifiers 42, 44 drive the transmission path directly from the current signal supplied from the current block drive 40 with no distorting or bandwidth limiting device, such as a switch, in the path. While no physical switch is in the transmission path from the SLIC to the telephone, the function of protecting the SLIC from the ringer signal voltage is embedded in the amplifiers 42, 44. When the amplifiers 42, 44 are turned on, they operate normally; but, when they are turned off, they are tri-stated and function to isolate the SLIC from the ringer voltage.

While the circuit is shown in Figure 3 as a current gain block, the invention could be just as readily implemented in a voltage SLIC, *i.e.*, the amplifiers in the gain blocks 36, 38 can be voltage driven from a signal derived from a voltage block drive.

With reference to Figure 4, another embodiment of the present invention, more detailed than that shown in Figure 3, a SLIC 30 may drive a telephone line (and telephone 32). A ringer generator 34 may be selectively coupled to the telephone line through operation of the switches SW1, SW2. The SLIC 30 may include current gain blocks 36, 38 and a current block drive 40, similar in function to those described in relation to the like numbered elements in Figure 3.

The current gain block 36 may include an op amp 42, a forward resistor R4, a feedback resistor R3, and two feedback paths, one through the feedback resistor. The other current gain block may likewise include resistors R5 and R6, and similar feedback paths.

The current block drive 40 may include current sources 50, 52 each electrically connected through a pnp transistor 54, 56 and a diode 58, 60 to the op amps 42, 44 respectively. Similarly, the current block drive 40 may include current sinks 70, 72 each of which are electrically connected through a npn transistor 74, 76 and a diode 78, 80 to the op amps 42, 44 respectively.

With continued reference to Figure 4, in operation, the current sources 50, 52 along with the pnp transistors 54, 56 source current to the circuit. Similarly, the current sinks 70, 72 along with the npn transistors 74, 76 sink current from the circuit. Each of the diodes 58, 60, 78, 80 are blocking diodes so that when the op amps 42, 44 are tri-stated (and the transmission path is being driven by the ringer generator 34), the collector-base junctions of the pnp and npn transistors 54, 56, 74, 76 will not reverse bias. For example, if the op amp 42 is off and tri-stated and the switch SWi is closed, the voltage at the tip path will swing between the amplitude of the ringer signal (up to +/- 150 volts). When the voltage at the tip path is at +150 volts, the feedback resistor R3 will pull the cathode of the diode 58 to +150 volts, reverse biasing it. When the voltage at the tip path goes to -150 volts, the feedback resistor R3 will pull the cathode of the diode 58 to - 150 volts, but the diode 58 will remain forward biased and the pnp transistor 54 remains in its normal mode of operation with a reverse biased collector-base junction.

In a preferred embodiment, the pnp and npn transistors are bipolar transistors. The junction breakdowns of the diodes and the transistors must be adequate to handle the voltage and current of the ringer signal which will be experienced in operation.

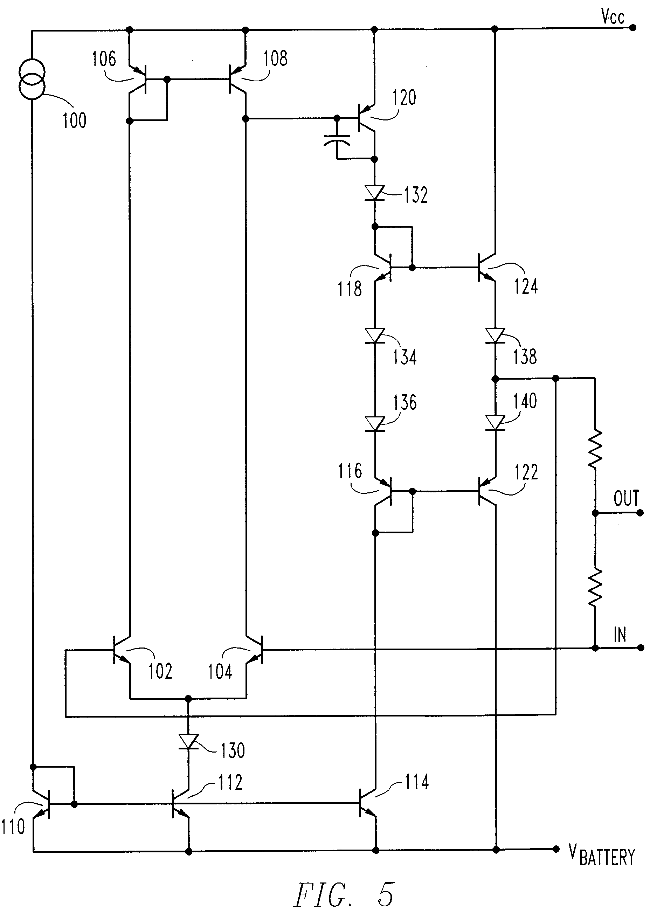

With reference to Figure 5, the op amp and current block drive of the circuit of Figure 4 may include a current source 100, input bipolar transistors 102, 104, feedback resistors 150, 152, bipolar transistors 106 - 124, and diodes 130 - 140 electrically connected. As shown, the circuit of Figure 5 operates as a two stage op amp with all bias currents and voltages derived from the current source 100. If the current source 100 is on, the amplifier circuit functions normally as an op amp. The resistors 150, 152 and the op amp form a current gain block. For example, a current flowing into the node IN will flow into the resistor 152 causing an input across the input bipolar transistors 102, 104, causing the amplifier to drive the resistor 150 until the two resistors 150, 152 have the same voltage across them. When this occurs, the current at the OUT node will be equal to the current at the IN node multiplied by the ratio of the resistance of the two resistors 152, 150, _i.e._, R152/R150.

Figure 5 shows when the current source 100 is off, the amplifier is completely shut off, and the node OUT goes to a high impedance state. For example, if the amplifier is shut off and a voltage of 150 volts (from the ringer signal) is applied across the OUT node, the transistors 112, 114 and 122 take the voltage across their collector-base junctions and the diodes 136, 138 reverse bias. On the other hand, if the voltage across the OUT node goes to -150 volts, transistors 120, 124 take the voltage across their collector-base junctions and diodes 130, 134 and 140 reverse bias. Note that in this embodiment of the present invention, while the output node of the op amp is forced to a voltage far outside its supply rails, the amplifier is not destroyed because of the use of the high breakdown diodes which are forward biased when the amplifier is operating.

Usually a SLIC performs more than just the function of driving the transmission line but also performs a variety of other functions including echo cancellation, impedance matching and, in general, interfacing between a telephone instrument and the telephone network. In accomplishing these functions, it is often necessary for the SLIC to sense (or detect) conditions occurring on the transmission line, particularly those conditions initiated at the telephone instrument (_e.g._, ground key, hook flash, etc.). In prior art systems, it was often required to protect the sensing elements from the high voltages and currents associated with the ringer voltage and the sensing elements would. Accordingly, sensing elements and circuits would often be placed behind the switches in the transmission path, so that the elements could be isolated from the transmission path when a ringer signal was being applied. Because the present invention does not use conventional switches to isolate the SLIC from the ringer signal, it is desirable to protect the sense elements through some other mechanism than previously used.

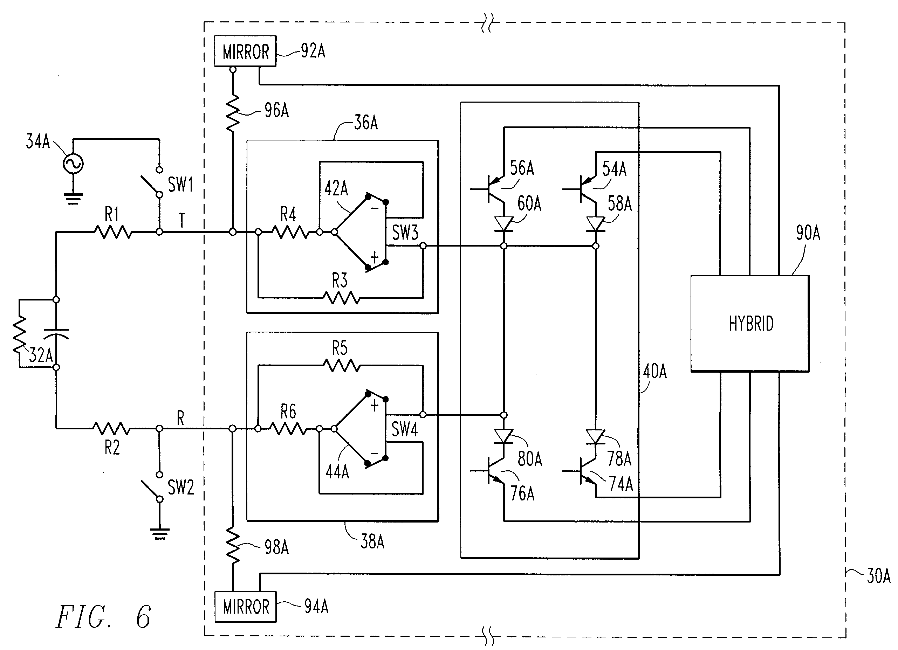

With reference to Figure 6, sensing elements associated with the SLIC may be protected by the use of relatively large resistors in series with the sensing elements. The present invention may include current gain blocks 30, 36 which operate and are driven as described herein in association with Figure 4. The current block drive 40 is driven from the hybrid 90, also as described in Figure 4. Current mirrors 92, 94 sense conditions on the transmission path and provide the sensed information (by way of a mirrored current signal or otherwise) to the hybrid for further processing and, if applicable, response. If the current mirrors 92, 94 were exposed to the ringer voltage, there is a danger that the mirrors would be overloaded and/or destroyed. Accordingly, the sensing paths to the current mirrors 92, 94 may be protected by relatively large resistors 96, 98 in series with the current mirrors 92, 94.

Figure 6 shows the resistors 96, 98 operate as sensors, developing a current which is supplied to the current mirrors 92, 94 and, ultimately, is sent to the hybrid where they are processed for various functions. Note that in this embodiment of the invention, the sense resistors are not switched out of the circuit but remain connected to the tip and ring paths when the ringer signal is applied to the telephone line. Because the resistors 96, 98 are relatively large, they can withstand the ringer signal voltage. In a preferred embodiment, the resistors 96, 98 may be on the order of 100k ohms.

While not necessary, it may be desirable to place normally off transistors (not shown) in parallel with the current mirrors 92, 94. If such transistors are used, when the ringer signal is connected to the tip and ring paths, the transistors would be saturated so that the currents in the resistors 96, 98 are shunted away from the current mirrors 92, 94 and do not enter the hybrid 90.

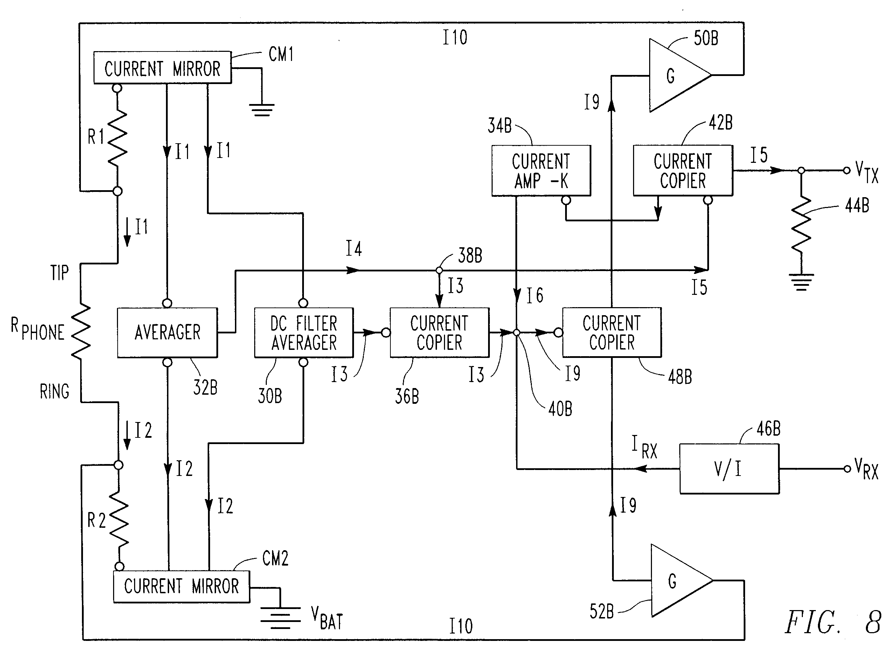

The embodiment of Figure 7 may find use in current mode SLICE without the further circuitry discussed below it, for example, only the DC impedance components are to be fed back to the two-wire side of the SLIC. The synthesized DC impedances provided to tip and ring connections are:

$$Z_{TIP}DC \ (R1A+R2A)/(2(1+G1A) \tag{6}$$

$$Z_{RING}DC \ (R1A + R2A)/(2(1 + G2A) \tag{7}$$

These will be equal to the impedances in equations (3) and (4) if R1A equals R2A.

The filter 301 may be conventional and include conventional components for combining and averaging the currents I1DC and I21DC.

Moreover, an AC component, may be provided by, averaging II and I2 in a second averaged 32 to provide I4 combining I3 and I4 so that the DC component is removed.

$$I4 = (I11+I21)/2 = (I11DC+I21DC+I11AC+I21AC)/2 \tag{8}$$

$$I5 = I4+(-I3) = (I11AC+I21AC)/2 \tag{9}$$

As above, the average of I11 and I21 may be obtained without dividing in the averager 32 if the current mirrors CM11 and CM21 are arranged so that the reflected current is one half the impinging current.

Figure 8 illustrates, in block form, an embodiment of the improved circuitry for a SLIC. The blocks contain conventional components and further explanation is not required for those of skill in the art. Starting from the two-wire side of the SLIC, tip and ring currents I1B and I2B are provided by mirrors CM1B and CM2B to the filter 30B and the averager 32B. The DC components from the filter 30B may be copied in current copier 36B that provides copies of I3B to node 38B, where I3B joins current I4B to provide I5B, and to node 40B. I5B is copied in copier 42B and amplified by KB in current amplifier 34B to provide I6B to node 40B. I5B is also copied and imposed across resistor 44B to provide the transmit signal voltage $V_{TX}$. The receive signal voltage $V_{RX}$ is converted to a receive current IRX in converter 46B and provided to node 40B. At node 40B I3B joins I6B and IRX to provide I9B. I9B is the combination of receive current, and tip and ring currents that is desirably used for impedance matching.

$$I9B = I3B + I6B + IRX$$

I9B is copied in current copier 48B and provided to current gain blocks 50B and 52B, where it is amplified by a factor G and provided to the tip and ring connections.

$$I10 = I9 \times G$$

The embodiment of Figure 8 provides separately controllable AC and DC impedances as shown above in equations (a) and (b). It uses conventional components that may be included in an integrated circuit to provide the advantages of matching components available in integrated circuit SLICE.

In a current mode SLIC, information from the tip and ring voltage sensing resistor RS1 and RS2 may be used to determine whether the ring side of the telephone line has been grounded, as when a ground key or fault occurs. The additional components for making this determination use current information already available in a SLIC and may be integral with the SLIC.

The tip current, $I_{TIP}$ is proportional to the voltage at the tip side of the telephone line, and the ring current $I_{RING}$ is proportional to the voltage at the ring side of the telephone line.

$$I_{TIP} = (Groun - V_{TIP}) /RS1 \tag{1}$$

$$I_{RING} = (V_{RING} - V_{BATTERY})/RS2 \tag{2}$$

When the ring side of the telephone line is grounded, as by pushing a button on the telephone handset or by accident, a large longitudinal signal appears on the line that is seen as a DC component of the current $I_{RING}$ on the line. These longitudinal DC signals are to be distinguished from the longitudinal signals that are AC components of the signal that may be induced into the telephone line. As used herein, a "fault" includes the conditions when either the tip or ring side of the telephone line is grounded. Essentially, a grounded key is merely a "fault" of a limited time duration.

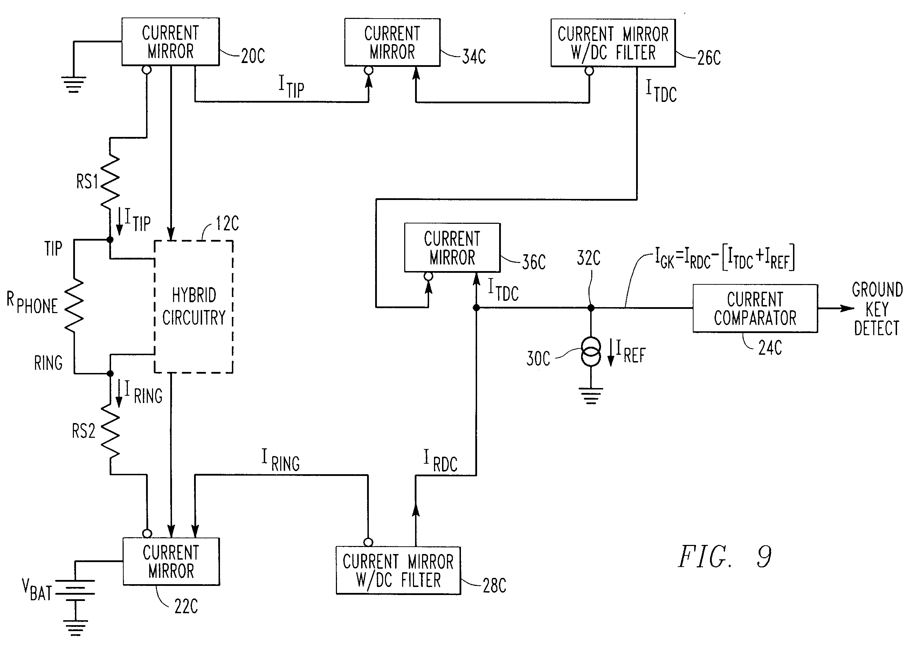

With reference to Figure 9, in which the hybrid circuitry 12C is shown as a box and the external circuitry 14C has been eliminated in the interest of clarity, SLIC current mirrors 20C and 22C provide copies of the tip and ring currents to the hybrid circuitry 12C, and provide additional copies for use by a comparator 24C for determination whether the ring side has been grounded. The copies provided to the comparator may be processed as discussed below.

The additional copies of $I_{TIP}$ and $I_{RING}$ from current mirrors 20C and 22C may be provided to filters 26C and 28C that filter out the AC signals (including the AC longitudinal signals), leaving DC tip and ring currents, $I_{TDC}$ and $I_{RDC}$. The DC tip and ring currents may be combined with a reference current from a current source 30C and provided to the comparator 24C. The current at node 32C, $I_{GK}$, that will be used in the comparator 24C to determine whether a ground exists is equal is the difference between the DC ring current, $I_{RDC}$, and the combination of the DC tip current, $I_{TDC}$, and the reference current, $I_{REF}$

$$I_{GK} = I_{RDC} -\!-(I_{TDC} + I_{REF})\qquad\qquad(3)$$

If $I_{RDC}$ is greater than ($I_{TDC} + I_{REF}$), that is, if $I_{GK}$ is positive, the comparator 24C may provide a first output. If $I_{RDC}$ is less than ($I_{TDC} + I_{REF}$), that is, if $I_{GK}$ is negative, the comparator 24C may provide a second output (or no output). If the comparator 24C provides the first output, the DC ring current must exceed the DC tip current by at least the reference current. When the reference current is set as needed to represent anticipated DC longitudinal signal from a ground as sensed at the comparator, a positive $I_{GK}$ indicates that a DC longitudinal signal caused by a ground has appeared on the telephone line. In normal operation, the signal from the comparator 24C may be used in a conventional manner to provide a ground key indication. While a ground indication on the ring side may also indicate a fault, the response of the SLIC may be the same. That is, it may protect itself by limiting the current from the feed amps for the duration of the indication to prevent overheating.

The filters 24C and 26C may include current mirrors, and additional current mirrors 34C and 36C may be provided so that the tip, ring, and reference currents may be combined as indicated in equation (3). For example, the filters 26C, 28C may include a series resistance and a shunting capacitance installed within the current mirror circuit.

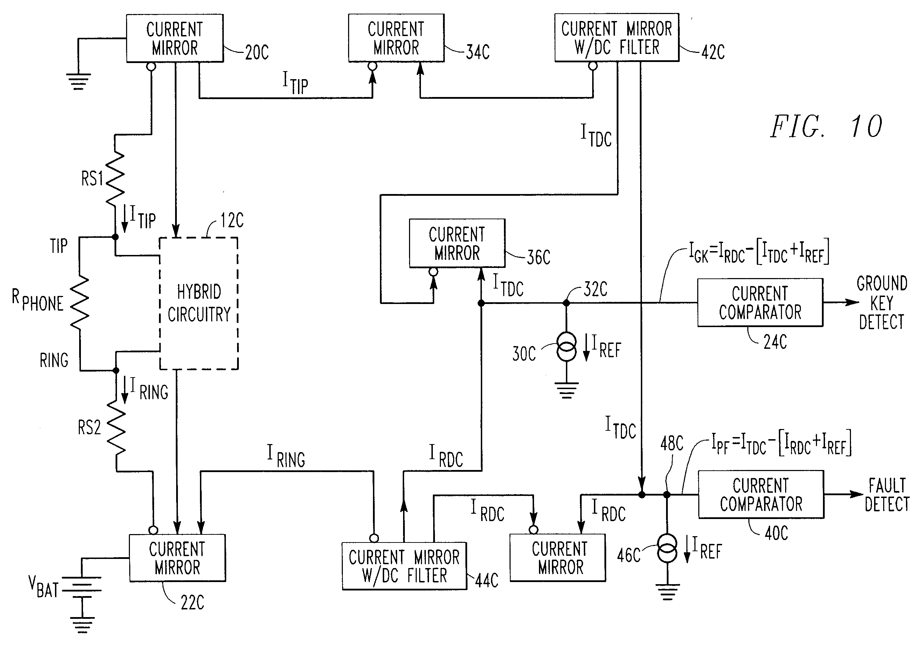

A fault may appear in the tip side of the line as well, although it would not be seen as a ground key (i.e., it is not a signal to an operator). With reference to Figure 10, the circuit of Figure 9 may be modified to sense a fault in the tip side by adding another comparator 40C. The additional copies of $I_{TIP}$ and $I_{RING}$ from current mirrors 20C and 22C may be provided to filters 42C and 44C that filter out the AC signals (including the AC longitudinal signals), leaving DC tip and ring currents, $I_{TDC}$ and $I_{RDC}$. The DC tip and ring currents may be combined with a reference current from a current source 46C and provided to the comparator 40C. The current at node 48C, $I_{PF}$ that will be used in the comparator 40C to determine whether a tip side fault exists is equal is the difference between the DC tip current, $I_{TDC}$, and the combination of the DC ring current, $I_{RDC}$, and the reference current, $I_{REF}$

$$I_{PF} = I_{TDC} - (I_{RDC} + I_{REF})\qquad\qquad(4)$$

If $I_{TDC}$ is greater than ($I_{RDC} + I_{REF}$), that is, if $I_{PF}$ is positive, the comparator 40C may provide a first output. If $I_{TDC}$ is less than ($I_{RDC} + I_{REF}$), that is, if $I_{PF}$ is negative, the comparator 40C may provide a second output (or no output). If the comparator 40C provides the first output, the DC tip current must exceed-the DC-ring current by at least the reference current. When the reference current is set as needed to represent anticipated DC longitudinal signal from a tip side fault as sensed at the comparator 40C, a positive $I_{PF}$ indicates that a DC longitudinal signal caused by a fault has appeared on the tip side telephone line. In normal operation, the signal from the comparator 40C may be used in a conventional manner to provide a fault indication so that the SLIC may protect itself by limiting the current from the feed amps for the duration of the indication to prevent overheating.

A circuit and method for isolating a subscriber line interface circuit ("SLIC") from the ringer generator in a telephone system. Using a gain blocking device to provide a signal gain when the ringer generator is utilized and to provide a high impedance when a ringer signal is present. A current mode subscriber line interface circuit (SLIC) for a telephone system in which AC and DC impedances for tip and ring connections of the SLIC are separately set. A ground key detector for a subscriber line interface circuit (SLIC) uses information from the tip and ring voltage sensing resistor RS1 and RS2 to determine whether the ring side of the telephone line has been grounded, as when a ground key or fault occurs.

**Claims**

1. A circuit for a telephone system comprising, a subscriber line interface circuit (""SLIC") having tip and ring paths electrically interconnecting the SLIC and a telephone instrument, a ringer generator for generating a ringer signal, switch means for selectively applying said ringer signal to said tip and ring paths, a selectively operable gain-setting blocking device isolating the SLIC from said ringer signal.

2. A circuit as claimed in claim 1 wherein said gain-setting blocking device comprises an amplifier capable of going into a tri-state mode, the output of said amplifier has a high impedance when in the tri-state mode, said amplifier selectively operates to drive the tip path, and said amplifier selectively operates to drive said ring path.

**3.** A circuit as claimed in claim 2 including means to drive said amplifier, in which said drive means comprises a current source.

**4.** A circuit as claimed in claim 3 wherein said drive means comprises a current source, a bipolar transistor, a blocking diode, said source, transistor and diode being electrically connected in series to said amplifier, to a second current source, a second bipolar transistor, and, a second blocking diode; said second source, second transistor and second diode being electrically connected in series to said amplifier.

**5.** A circuit as claimed in claim 4 wherein said source, said transistor and said diode operate to source current to said amplifier, and said source, said transistor and said diode operate to sink current from said amplifier.

**6.** A circuit as claimed in any one of claims 2 to 5 wherein said gain-setting blocking device comprises a current gain blocking device or a voltage gain blocking device.

**7.** A telephone line circuit for isolating ringer signals from a subscriber line interface circuit (SLIC) comprising tip and ring paths electrically interconnecting a SLIC and a telephone instrument, a ringer signal, selectively operable switch means for selectively applying said ringer signal to said tip and ring paths, a selectively operable gain-setting blocking device isolating the SLIC from said ringer signal.

**8.** A circuit as claimed in claim 7 wherein said gain blocking device comprises an amplifier capable of going into a tri-state mode, the output of said amplifier has a high impedance when in the tri-state mode, said amplifier selectively operates to drive the tip path, ring path, and is a current gain amplifier or a voltage gain amplifier.

**9.** A circuit for setting AC and DC impedances for tip and ring connections of a subscriber line interface circuit (SLIC) comprising first means for providing an average current of DC components of SLIC tip and ring voltages, second means for providing an average current of AC components of SLIC tip and ring voltages, and third means for changing the amplitude of the average of AC components relative to the amplitude of the average of DC components, so that the AC and DC impedances are separately set.

**10.** A circuit as claimed in claim 9 wherein said first means comprises a DC filter for removing AC components from tip and ring currents that are proportional to tip and ring voltages, and a first averager for averaging the DC components remaining, said second means comprises a second averager for averaging tip and ring currents, and a combiner for combining the average of DC components from said first means with the average of tip and ring currents from said second averager to provide the average of AC components, said third means comprises means for increasing the gain of the average of AC components from said combiner.

**11.** A circuit as claimed in claims 9 or 10 including means for amplifying a combination of (a) the average of DC components from said first means, (b) the amplified average of AC components from said third means, and (c) a current proportional to a receive voltage, and for providing the amplified combination to the tip and ring connections of the SLIC.

**12.** A circuit as claimed in any of claims 9 to 11 wherein said third means comprises a voltage amplifier. between two resistors for amplifying the average of AC components, and wherein a ratio of resistances of said two resistors sets SLIC four-wire to two-wire gain and the AC impedance for the tip and ring connections.

**13.** A current mode subscriber line interface circuit (SLIC) for a telephone system, the SLIC comprising current means for separately setting AC and DC impedances for tip and ring connections of the SLIC, as claimed in any one of claims 9 to 12.

**14.** A circuit as claimed in claim 13 wherein said current mode means further comprises resistive means for setting SLIC four-wire to two-wire gain separately from SLIC two-wire to four-wire gain.

**15.** A subscriber line interface circuit (SLIC) comprising first and second current mirrors for providing separate tip and ring currents that are respectively proportional to tip and ring voltages at a two-wire side of the SLIC, a DC filter and a first averager for providing an average current of DC components of the tip and ring currents, a second averager for providing an average current of the tip and ring currents, means for providing an average current of AC components of the tip and ring currents by removing the average of DC components from the average of tip and ring currents, a current amplifier for amplifying the average of AC components of the tip and ring currents, and for providing a copy of the amplified current from said current amplifier to a transmit voltage connection at a four-wire side of the SLIC; a voltage to current converter for providing a receive current proportional to a receive voltage at the four-wire side of the SLIC, a voltage to current converter for providing a receive current proportional to a receive voltage at the four-wire side of the SLIC, combiner means for providing a feedback current by combining the receive current, the amplified average of AC currents from said current amplifier, and the average of DC currents from said first averager, and two amplifiers for amplifying said feedback current and providing the amplified feedback current to the two-wire side of the SLIC.

16. A ground key detector for a subscriber line interface circuit (SLIC), the SLIC having a first current mirror for providing a current proportional to a tip voltage and a second current mirror for providing a current proportional to a ring voltage, the detector comprising a first DC filter for providing a DC tip current proportional to a DC component of the current from the first current mirror, a second DC filter for providing a DC ring current proportional to a DC component of the current from the second current mirror, source of reference current, a first comparator for comparing the DC ring current to a combination of the DC tip current and the reference current, and for indicating that a ground key has been detected based on the result of the comparison.

17. A detector as claimed in claim 16 wherein means for providing a signal related to the DC tip current and the DC ring current to the SLIC for use in a hybrid portion thereof.

18. A detector as claimed in claims 16 or 17 wherein said first and second DC filters each comprise a current mirror so a third current mirror for reflecting the current from the first current mirror before it is provided to the first DC filter, and a fourth current mirror for reflecting the DC tip current from the first DC filter before it is provided to said first comparator.

19. A detector as claimed in claim 16 including a fault detector comprising, a second comparator for comparing the DC tip current to a combination of the DC ring current and the reference current, and for indicating that a fault has been detected based on the result of the comparison, said second comparator indicates that a fault has been detected when the DC tip current is greater than the combination of the DC ring current and the reference current.

20. A detector as claimed in claim 19 including a fifth current mirror for reflecting the current from said second DC filter before it is provided to said second comparator.

21. A ground key detector for a SLIC as claimed in any one of claims 16 to 20, wherein a source of reference current, means for converting a voltage difference between a tip voltage and ground to a tip current, means for converting a voltage difference between a ring voltage and a battery voltage to a ring current, and a comparator for comparing the ring current to a combination of the tip current and the reference current.

FIG. 1

FIG. 2
(PRIOR ART)

FIG. 3

I1IX G1I

CURRENT MIRROR — CM1

R1I  $\downarrow$ I1I

I1I  G1I

TIP

$R_{PHONE}$

RING

I2I  G2I

R2I  $\downarrow$ I2I

CURRENT MIRROR  CM2I  $V_{BAT}$

I2IX G2I

*FIG. 2A*
(PRIOR ART)

I3AX G1A

CURRENT MIRROR — CM1I

R1A  $\downarrow$ I1A  I1A

G1A

I3

TIP

$R_{PHONE}$

DC FILTER AVERAGER  30A

RING

I3A  G2A

R2I  $\downarrow$ I2A  I2A

CURRENT MIRROR  CM2A  $V_{BAT}$

I3AX G2A

*FIG. 7*

FIG. 4

FIG. 5

FIG. 6

EP 0 760 576 A1

FIG. 8

FIG. 9

EP 0 760 576 A1

FIG. 10

EP 0 760 576 A1

European Patent Office

**EUROPEAN SEARCH REPORT**

Application Number

EP 95 30 6029

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 520 171 (SGS-THOMSON MICROELECTRONICS S.R.L.) * figure 2 * | 1,2,7,8 | H04M19/02 |
| Y | PATENT ABSTRACTS OF JAPAN vol. 10, no. 5 (E-372) 10 January 1986 & JP-A-60 170 308 (ROOMU KK) 3 September 1985 * abstract * | 1,2,7,8 | |
| D,A | US-A-4 203 012 (BOXALL) * abstract * | 1-8 | |
| A | WO-A-88 10542 (FUJITSU LIMITED) * abstract * | 1-8 | |
| A | IEEE JOURNAL OF SOLID-STATE CIRCUITS, vol.25, no.2, pages 458 - 465, XP000116687 MASAO AKATA ET AL. 'A No-Trimming Two-Chip Set with Coin Telephone Signaling Facilitties' * figure 4 * | | TECHNICAL FIELDS SEARCHED (Int.Cl.6) H04M |

The present search report has been drawn up for all claims

| Place of search | Date of completion of the search | Examiner |
|---|---|---|
| THE HAGUE | 1 February 1996 | MONTALBANO F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## LACK OF UNITY OF INVENTION

The Search Division considers that the present European patent application does not comply with the requirement of unity of invention and relates to several inventions or groups of inventions,
namely:

SEE SHEET -B-

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims:     1-8

European Patent

Office ·

EP 95306029 -B-

## LACK OF UNITY OF INVENTION

The Search Division considers that the present European patent application does not comply with the requirement of unity of invention and relates to several inventions or groups of inventions, namely:

1. Claims 1-8: Isolating the SLIC from ringer signal.

2. Claims 9-15: Setting AC & DC impedances.

3. CLaims 16-21: Ground key detector.